**Europäisches Patentamt**

**European Patent Office**

**Office européen des brevets**

(11) Veröffentlichungsnummer: **0 201 777**
**B1**

(12) **EUROPÄISCHE PATENTSCHRIFT**

(45) Veröffentlichungstag der Patentschrift:
12.07.89

(51) Int. Cl.⁴: **B65G 65/40**, B65G 53/40,
B65D 88/68

(21) Anmeldenummer: **86105700.8**

(22) Anmeldetag: **24.04.86**

(54) Vorrichtung zum Schüttgutaustrag aus einem Behälter.

(30) Priorität: **27.04.85 DE 3515379**

(43) Veröffentlichungstag der Anmeldung:
**20.11.86 Patentblatt 86/47**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**AT-B- 196 794**

**SOVIET INVENTIONS ILLUSTRATED, Sektion P,Q, Woche D39, 4. November 1981 DERWENT PUBLICATIONS LTD. London, Q 34**

(73) Patentinhaber: **KBI-Klöckner-Becorit Industrietechnik GmbH, In der Beckuhl 12,
D-4224 Hünxe-Buchholtwelmen(DE)**

(72) Erfinder: **Stegner, Mathias, Kaiserslauterner-Strasse 30,
D-6806 Viernheim(DE)**

(74) Vertreter: **Katscher, Helmut, Dipl.-Ing.,
Bismarckstrasse 29, D-6100 Darmstadt(DE)**

## Beschreibung

Die Erfindung betrifft eine Vorrichtung zum Schüttgutaustrag aus einem Behälter mit einem in einem Behälterauslaß angeordneten Dosierkörper, der über eine sich nach oben erstreckende Hubstange mit einem Hubantrieb verbunden ist.

Bei einer solchen bekannten Vorrichtung (DE-C 2 533 070) dienen die Hubbewegungen des Dosierkörpers in erster Linie zu einer Dosierung des Schüttgutaustrags. Zu diesem Zweck werden die Hubbewegungen nach Hubgröße und/oder Hubfrequenz gesteuert. Außerdem bewirken die Hubbewegungen des Dosierkörpers aber auch eine ständige Auflockerung des Schüttgutes im Bereich des Behälterauslasses, so daß auch schwierigeres Schüttgut, das zu einer Brückenbildung neigt, ausgetragen werden kann. Es gibt jedoch Schüttgüter, die so schwierig auszutragen sind, daß sie auch durch die Hubbewegungen des Dosierkörpers im Behälterauslaß und gegebenenfalls eine zusätzliche seitliche Belüftung im unteren Bereich des Behälters nicht ausreichend gelockert werden können, um einen zufriedenstellenden Schüttgutaustrag zu ermöglichen.

Bei einer anderen bekannten Vorrichtung zum Schüttgutaustrag aus einem Behälter (AT-A 196 794) ist der kegelförmige Dosierkörper im Behälterauslaß mittels einer Schraubspindel höhenverstellbar und drehbar. Der Dosierkörper weist im unteren Behälterbereich Flügel auf, die mit dort angebrachten feststehenden Stäben zusammenwirken. Ein kontinuierlicher Hubantrieb des Dosierkörpers zum Zwecke der Schüttgutdosierung ist dort jedoch nicht vorgesehen.

Bei einer anderen bekannten Vorrichtung zum Schüttgutaustrag aus einem Behälter (SOVIET INVENTIONS, ILLUSTRATED, Sektion P,Q, Woche D39, 4. November 1981 DERWENT PUBLICATIONS LTD. LONDON, Q 34 SU-793 877) sind seitliche Flügel an einem zentralen Rohr angebracht, das im Behälter gleichzeitig eine Drehbewegung und eine davon abgeleitete Hubbewegung ausführt. Der Drehantrieb des Rohrs erfolgt durch eine zentrale Welle, die am Behälterauslaß eine Austragsschnecke antreibt. Da sowohl die Drehbewegung als auch die Hubbewegung der Rührflügel durch die Drehbewegung der Austragsschnecke vorgegeben ist und da diese Drehbewegung der Austragschnecke wiederum von der jeweils geforderten Austragsmenge abhängt, ist eine Anpaßung der Bewegungen der Rührflügel an die Erfordernisse des jeweils auszutragenden Schüttgutes und insbesondere eine gesonderte, jeweils optimierte Drehbewegung und Hubbewegung der Rührflügel nicht möglich.

Aufgabe der Erfindung ist es daher, eine Vorrichtung der eingangs genannten Gattung so auszugestalten, daß damit auch sehr schwierige Schüttgüter ausgetragen werden können, beispielsweise Gips mit einem erhöhten Feuchtigkeitsanteil, und daß insbesondere eine optimale und jeweils gesonderte Anpassung der Bewegungen zur Auflockerung an die Anforderungen des jeweiligen Schüttgutes ermöglicht wird.

Diese Aufgabe wird erfindungsgemäß dadurch gelöst, daß im Behälter oberhalb des Behälterauslasses Rührflügel angeordnet sind, daß die Rührflügel an einem die Hubstange konzentrisch umgebenden, drehbar gelagerten Tragrohr befestigt sind, das mit einem Drehantrieb verbunden ist, daß das Tragrohr durch einen Hubantrieb zu kontinuierlichen Hubbewegungen antreibbar ist, und daß der Drehantrieb intermittierend antreibbar ist.

Drehbar angetriebene Rohrflügel im unteren Bereich von Schüttgutbehältern sind als wirksame Maßnahme zur Erleichterung des Schüttgutaustrags in zahlreichen Ausführungsformen bekannt. Es hat sich jedoch gezeigt, daß bei besonders schwierigem Schüttgut auch die sich drehenden Rührflügel keine ausreichende Auflockerung des Schüttgutes bewirken können, um einen kontinuierlichen Schüttgutaustrag zu ermöglichen. Erst durch die Hubbewegung überlagerte, gesondert und intermittierend ausgeführte Drehbewegungen der Rührflügel wird es möglich, schwieriges Schüttgut, wie beispielsweise feuchten Gips, kontinuierlich und dosiert aus dem Behälter auszutragen. Brückenbildungen oder sonstiges Verstopfen werden wirksam verhindert.

Das die Rührflügel tragende Tragrohr kann mit einem gesonderten Hubantrieb verbunden sein oder zusammen mit dem Dosierkörper durch einen gemeinsamen Hubantrieb angetrieben werden.

Der gemeinsame Hubantrieb der Rührflügel mit dem Drehkörper läßt sich in konstruktiv besonders einfacher Weise dadurch erreichen, daß das die Rohrflügel tragende Tragrohr mit der Hubstange axial verbunden und an der Hubstange drehbar gelagert ist. Die Hubstange nimmt dadurch das Tragrohr zu den Hubbewegungen mit, wobei sich das Tragrohr dreht, während die Hubstange keine Drehbewegungen ausführt.

Weitere vorteilhafte Ausgestaltungen des Erfindungsgedankens sind Gegenstand weiterer Unteransprüche.

Die Erfindung wird nachfolgend an einem Ausführungsbeispiel näher erläuter, das in der Zeichnung dargestellt ist. Es zeigt:

Fig. 1 im senkrechten Schnitt einen Behälter mit einer Dosier- und Austragseinrichtung,

Fig. 2 einen vergrößerten Teilschnitt durch den Hub- und Drehantrieb der Vorrichtung nach Fig. 1,

Fig. 3 eine andere Ausführungsform in einem Schnitt ähnlich der Fig. 1 und

Fig. 4 einen vergrößerten Teilschnitt ähnlich der Fig. 2 durch die Hubantriebe un den Drehantrieb der Vorrichtung nach Fig. 3.

Ein zur Aufnahme eines Schüttgutes 1, beispielsweise Gips mit einem erhöhten Feuchtigkeitsgehalt, bestimmter Behälter 2 weist einen sich nach unten kegelstumpfförmig verjüngenden Behälterabschnitt 3 auf, der in einem Behälterauslaß 4 endet. An den Behälterauslaß 4 ist über eine Verschlußkappe 5 eine Rohrleitung 6 für den weiteren Transport des Schüttgutes 1 angeschlossen, die beispielsweise mit einer pneumatischen Förderleitung verbunden ist. Im Behälterauslaß 4 ist ein doppelkegelförmiger Dosierkörper 7 angeordnet, der über eine senkrecht nach oben ragende Hubstange 8 mit einem Hubantrieb 9, beispielsweise einem druckmittelbetätigten Zylinder verbunden ist. Eine Steuereinrichtung 10 steuert die Hubbewegungen des Dosierkörpers 7 über den Hubantrieb 9 und die Hubstange 8 nach Größe und/oder Frequenz.

An einem die Hubstange 8 konzentrisch umgebenden Tragrohr 11 sind am unteren Ende Rührflügel 12 angeordnet, die bei einer Drehbewegung den unteren Bereich des Behälters 2 durchlaufen, um das Schüttgut 1 aufzulockern.

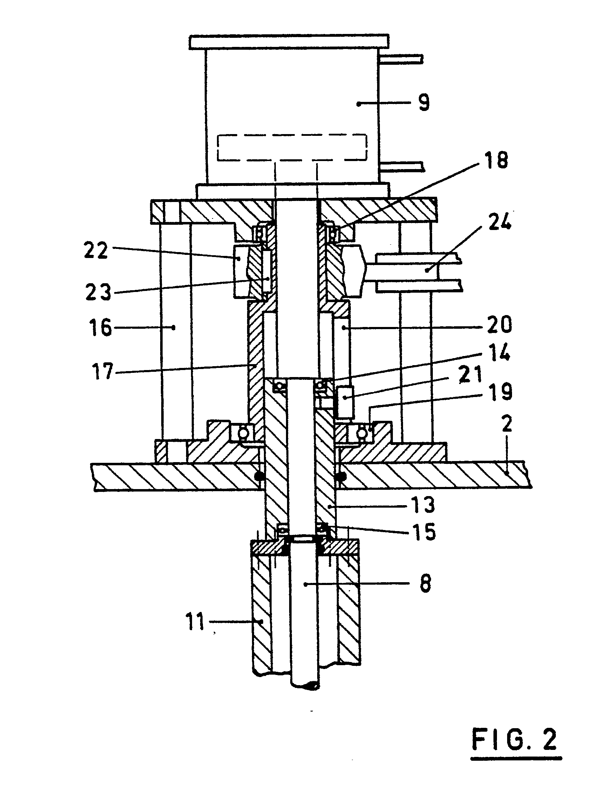

Wie in Fig. 2 in Einzelheiten dargestellt ist, ist das Tragrohr 11 an seinem oberen Ende mit einer Hülse 13 verbunden, die über Axiallager 14, 15 an der Hubstange 8 drehbar gelagert, jedoch axial festgelegt ist. Bei den Hubbewegungen, die die Hubstange 8 mittels des Hubantriebs 9 ausführt, wird auf diese Weise das Tragrohr 11 mitgenommen.

In einem auf den Behälter 2 aufgesetzten Gestell 16 ist eine Mitnahmebüchse 17 in Radiallagern 18, 19 drehbar gelagert. Die Mitnahmebüchse 17 umgibt die Hubstange 8 und das obere Ende der Hülse 13 und weist mehrere Längsschlitze 20 auf, in die jeweils eine Führungsrolle 21 ragt, die mit der Büchse 13 verbunden ist. Auf diese Weise ist das Tragrohr 11 und die damit verbundene Büchse 13 in der konzentrisch dazu angeordneten Mitnahmebüchse 17 längsverschiebbar, jedoch undrehbar geführt.

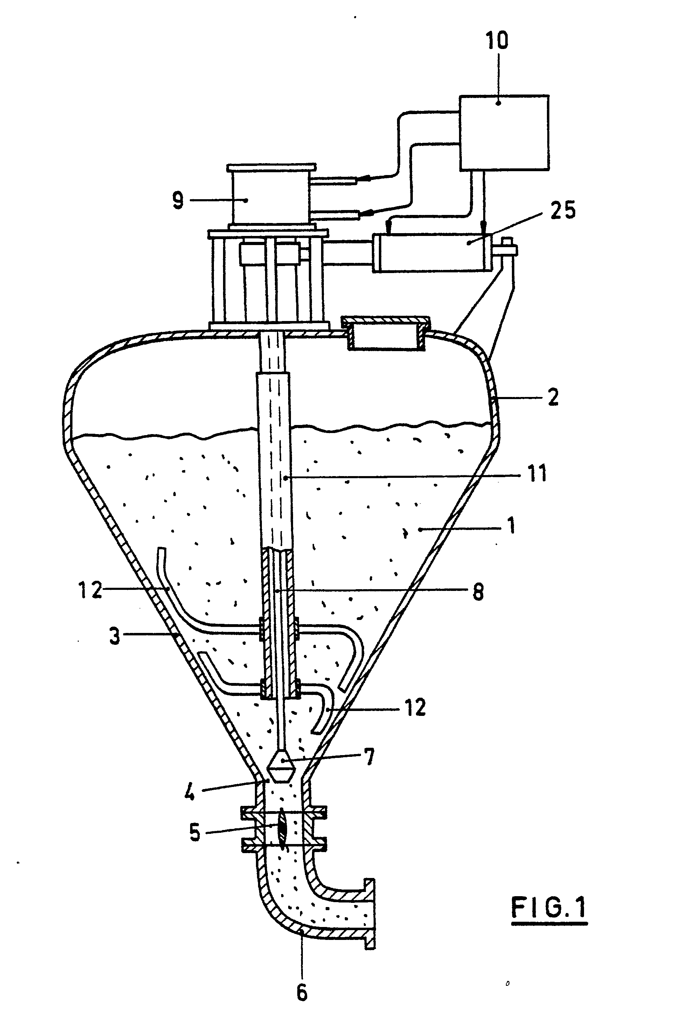

Der Innenring eines Freilaufgesperres 22 ist undrehbar mit einem oberen Ansatz der Mitnahmebüchse 17 durch eine Paßfeder 23 verbunden. Der Außenring des Freilaufgesperres 22 ist über einen Hebel 24 mit einem druckmittelbetätigten Zylinder 25 (Fig. 1) verbunden, der einen Drehantrieb für das Tragrohr 11 und die Rührflügel 12 bildet.

Die Steuereinrichtung 10 steuert den Zylinder 25 im Takt des Hubantriebs 9. Bei jedem Arbeitstakt führt die Mitnahmebüchse 17 und damit das Tragrohr 11 einen Drehschritt aus. Zugleich wird das Tragrohr 11 durch die im gleichen Takt erfolgende Hubbewegung der Hubstange 8 mitgenommen.

Die Steuereinrichtung 10 kann auch so betätigt werden, daß der Drehantrieb 25 der Rührflügel 12 in seiner Taktfrequenz von der Hubfrequenz des Hubantriebs 9 abweicht. Beispielsweise kann auf jeden zweiten Hub des Dosierkörpers 7 ein wahlweise längerer oder kürzerer Drehhub der Rührflügel 12 entfallen. Diese Steuerung und Abstimmung der Hubbewegung des Dosierkörpers 7 und der Drehbewegungen der Rührflügel 12 erfolgt in Abhängigkeit von den Eigenschaften des jeweils auszutragenden Schüttgutes 1.

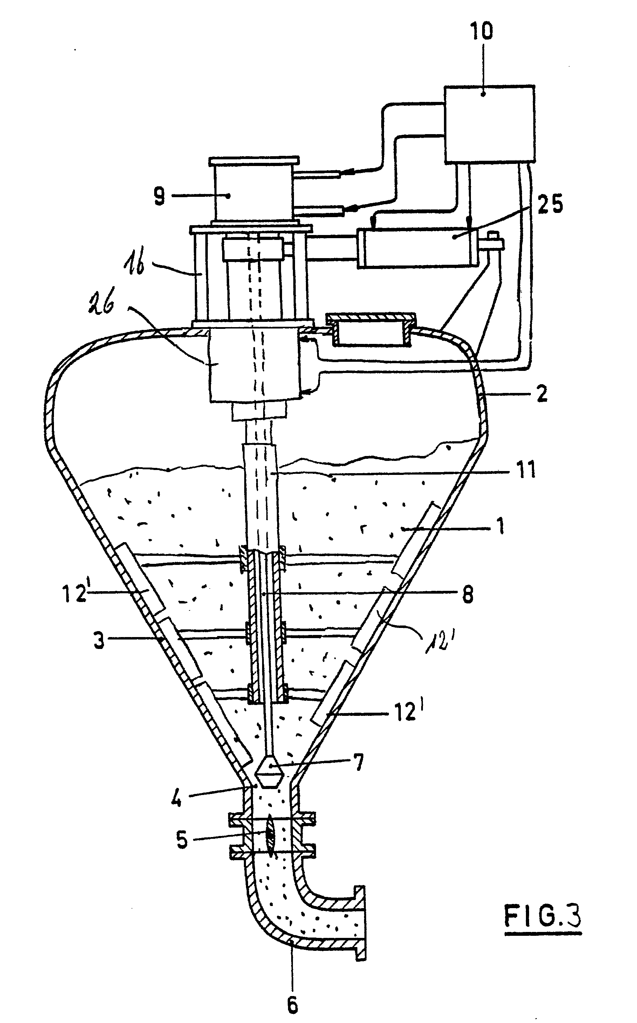

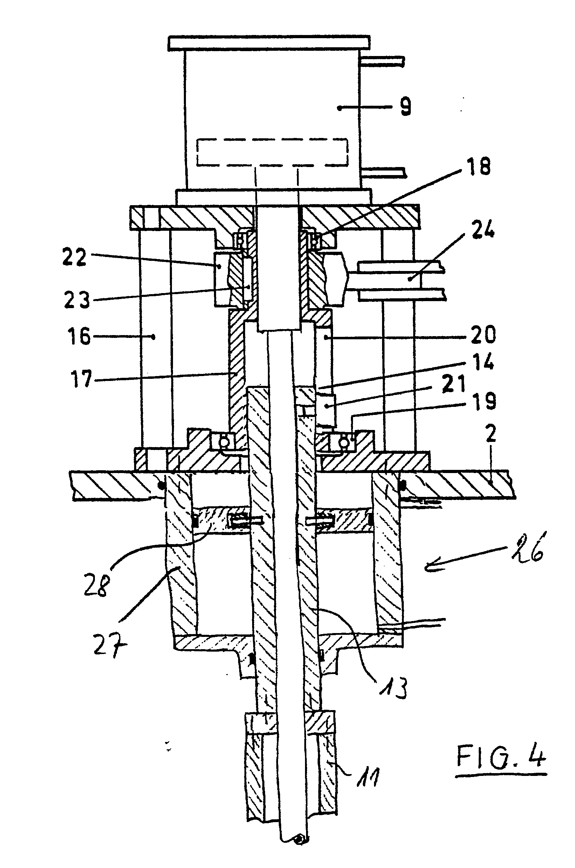

Fig. 3 zeigt in einer der Fig. 1 ähnlichen Darstellungsform eine abgewandelte Ausführungsform eines Behälters mit einer Dosier- und Austragseinrichtung. Gleiche Bauteile sind mit gleichen Bezugszeichen wie in Fig. 1 versehen. Die in Fig. 3 dargestellte Ausführungsform unterscheidet sich von der Ausführungsform nach Fig. 1 nur dadurch, daß der Hubantrieb des die Rührflügel 12' tragenden Tragrohres 11 nicht durch den Hubantrieb 9 der Hubstange 8 für den Dosierkörper 7 erfolgt, sondern durch einen gesonderten Hubantrieb 26, der beispielsweise von einem druckmittelbetätigten Zylinder gebildet wird, der am unteren Ende des Gestells 16 angeordnet ist. Der Hubantrieb 26 wird ebenfalls von der Steuereinrichtung 10 gesteuert. Einzelheiten sind in Fig. 4 dargestellt.

Das Tragrohr 11 (Fig. 4) ist an seinem oberen Ende mit der Hülse 13 verbunden, die sich durch einen Zylinder 27 hindurch erstreckt, der unterhalb des Gestells 16 angebracht ist. Im Zylinder 27 ist ein Kolben 28 dichtend geführt, der mit der Hülse 13 verbunden ist. Wenn im Zylinder 27 die Oberseite bzw. die Unterseite des Kolbens 28 abwechselnd mit einem Druckmittel beaufschlagt wird, führt der Kolben 28 Hubbewegungen auf. Dabei nimmt er die Hülse 13 und über das Tragrohr 11 die Rührflügel 12' mit. Die Verbindung des Kolbens 28 mit der Hülse 13 kann so ausgeführt sein, daß sich die Hülse 13 im Kolben 28 drehen kann.

Da bei dieser Ausführungsform für die Rührflügel 12' ein vom Hubantrieb 9 des Dosierkörpers 7 unabhängiger Hubantrieb 26 vorgesehen ist, können für die Hubbewegungen des Dosierkörpers 7 und der Rührflügel 12' unterschiedliche Hubhöhen und Hubfrequenzen gewählt werden. Dies hat sich für den Austrag schwieriger Schüttgüter als besonders vorteilhaft erwiesen. Manche besonders schwierig auszutragende Schüttgüter, wie beispielsweise feuchter Gips, lassen sich unter bestimmten Betriebsbedingungen nur dann austragen, wenn die Hubbewegungen der Rührflügel 12' unabhängig von den Hubbewegungen des Dosierkörpers 7 gesteuert werden, wobei es auch zeitweise erforderlich sein kann, die Hubbewegungen der Rührflügel 12' ganz abzuschalten.

Fig. 3 zeigt, daß die Rührflügel 12' in der unteren Hubstellung dicht an der Behälterwand des kegelstumpfförmigen Behälterabschnitts 3 anliegen. Die Rührflügel 12' sind hierbei schneidenförmig gestaltet, wobei sich ihre Schneidenkanten bei einer Drehbewegung in der unteren Hubstellung dicht an der Behälterwand entlang bewegen. Es ist aber auch möglich, die Rührflügel 12' in engem Abstand zur Behälterwand anzuordnen.

## Patentansprüche

1. Vorrichtung zum Schüttgutaustrag aus einem Behälter (2) mit einem in einem Behälterauslaß (4) angeordneten Dosierkörper (7), der über eine sich nach oben erstreckende Hubstange (8) mit einem Hubantrieb (9) verbunden ist, dadurch gekennzeichnet, daß im Behälter (2) oberhalb des Behälterauslasses (4) Rührflügel (12, 12') angeordnet sind, daß die Rührflügel (12) an einem die Hubstange (8) konzentrisch umgebenden, drehbar gelagerten Tragrohr (11) befestigt sind, das mit einem Drehantrieb (25) verbunden ist, daß das Tragrohr (11) durch einen Hubantrieb (9, 26) zu kontinuierlichen Hubbewegungen antreibbar ist, und daß der Drehantrieb (25) intermittierend antreibbar ist.

2. Vorrichtung nach Anspruch 1, daduch gekennzeichnet, daß der Drehantrieb (25) ein Freilaufgesperre (22) aufweist.

3. Vorrichtung nach Anspruch 1, dadurch gekennzeichnet, daß das Tragrohr (1) durch den Hubantrieb (9) der Hubstange (8) gemeinsam mit dem Dosierkörper (7) antreibbar ist.

4. Vorrichtung nach Anspruch 1, dadurch gekennzeichnet, daß das Tragrohr (11) mit einem gesonderten Hubantrieb (26) verbunden und unabhängig von dem Dosierkörper (7) zu Hubbewegungen antreibbar ist.

5. Vorrichtung nach Anspruch 3, dadurch gekennzeichnet, daß das Tragrohr (11) mit der Hubstange (8) axial verbunden und an der Hubstange (8) drehbar gelagert ist.

6. Vorrichtung nach Anspruch 1, dadurch gekennzeichnet, daß das Tragrohr (1) längsverschiebbar, jedoch undrehbar in einer konzentrisch angeordneten Mitnahmebüchse (17) geführt ist, die mit dem Drehantrieb (22, 24, 25) verbunden ist.

7. Vorrichtung nach Anspruch 2, dadurch gekennzeichnet, daß an einem mit dem Freilaufgesperre (22) verbundenen Hebel (24) ein druckmittelbetätigter Zylinder (25) angreift.

8. Vorrichtung nach Anspruch 1, dadurch gekennzeichnet, daß der Drehantrieb (25) des Tragrohrs (11) im Takt des Hubantriebs (9, 26) des Dosierkörpers (7) oder des Tragrohres (11) gesteuert wird.

9. Vorrichtung nach Anspruch 1, dadurch gekennzeichnet, daß die Rührflügel (12') schneidenförmig gestaltet sind.

**Claims**

1. Device for discharging bulk material from a container (2), having an apportioning body (7) arranged in a container outlet (4), which is connected to a lifting drive (9) through a lifting mechanism (8) which extends upwards, characterised in that, in the container (2), above the container outlet (4), agitator blades (12, 12') are arranged, that the agitator blades (12) are attached to a pivoted supporting tube (11) which is connected to a rotating drive (25), that the supporting tube (11) is driveable by a lifting drive (9, 26) for continuous lifting movements, and that the rotating drive (25) is intermittently driveable.

2. Device according to Claim 1, characterised in that the rotating drive (25) has a freewheel locking catch (22).

3. Device according to Claim 1, characterised in that the supporting tube (1) is driveable by the lifting drive (9) of the lifting mechanism (8) jointly with the apportioning body (7).

4. Device according to Claim 1, characterised in that the supporting tube (11) is connected to a separate lifting drive (26) and can be driven for lifting movements independently of the apportioning body (7).

5. Device according to Claim 3, characterised in that the supporting tube (11) is axially connected to the lifting mechanism (8) and is pivoted on the lifting mechanism (8).

6. Device according to Claim 1, characterised in that the supporting tube (1) can be displaced lengthwise, but is guided non-rotatably in a concentrically arranged driving bush (17) which is connected to the rotating drive (22, 24, 25).

7. Device according to Claim 2, characterised in that a cylinder (25) operated by a pressure medium acts on a lever (24) connected to the freewheel locking catch (22).

8. Device according to Claim 1, characterised in that the rotating drive (25) of the supporting tube (11) is controlled in time with the lifting drive (9, 26) of the apportioning body (7 or of the supporting tube (11).

9. Device according to Claim 1, characterised in that the agitator blades (12') are designed to be knife-shaped.

**Revendications**

1. Dispositif pour le déchargement de matières en vrac d'un récipient (2), comportant un corps de dosage (7) agencé dans une ouverture de sortie (4) du récipient et relié, via un poussoir (8) s'étendant vers le haut, à un organe d'entraînement (9) dudit poussoir, caractérisé en ce que des pales d'agitation (12, 12') sont agencées à l'intérieur du récipient (2), au-dessus de l'ouverture de sortie (4) du récipient, en ce que les pales d'agitation (12) sont fixées à un tube de support (11) logé de manière à pouvoir tourner et entourant concentriquement le poussoir (8), tube de support (11) qui est relié à un organe d'entraînement en rotation (25), en ce que le tube de support (11) est entraîné dans des mouvements de translation continus par un organe d'entraînement en translation (9, 26) et en ce que l'organe d'entraînement en rotation (25) est entraîné de manière discontinue.

2. Dispositif selon la revendication 1 caractérisé en ce que l'organe d'entraînement en rotation (25) comporte un moyen de blocage de roue libre (22).

3. Dispositif selon la revendication 1, caractérisé en ce que le tube de support (1) est entraîné avec le corps de dosage (7) par l'organe d'entraînement en translation (9, 26) du poussoir (8).

4. Dispositif selon la revendication 1, caractérisé en ce que le tube de support (1) est relié à un organe d'entraînement en translation individuel (26) et est entraîné en des mouvements de va-et-vient indépendamment du corps de dosage (7).

5. Dispositif selon la revendication 3, caractérisé en ce que le tube de support (11) est relié axialement au poussoir (8) et est logé à ce dernier de manière à pouvoir tourner.

6. Dispositif selon la revendication 1, caractérisé en ce que le tube de support (11) est guidé de manière à pouvoir coulisser longitudinalement sans toutefois pouvoir tourner dans une douille d'entraînement concentrique (17) qui est reliée à l'organe d'entraînement en rotation (22, 24, 25).

7. Dispositif selon la revendication 2, caractérisé en ce qu'un cylindre (25) actionnable par un agent sous pression agit sur un levier (24) relié au moyen de blocage de roue libre (22).

8. Dispositif selon la revendication 1, caractérisé en ce que l'organe d'entraînement en rotation (25) du tube de support (11) est commandé au rythme de l'organe d'entraînement en translation (9, 26) du corps de dosage (7) ou du tube de support (11).

9. Dispositif selon la revendication 1, caractérisé en ce que les pales d'agitation (12') affectent la forme de lames.

FIG.1

FIG. 2

FIG.3

FIG.4